# EUROPÄISCHE PATENTANMELDUNG

(11) **EP 2 541 714 A1**
(43) Veröffentlichungstag der Anmeldung: **02.01.2013**
(21) Anmeldenummer: 11005352.7
(22) Anmeldetag: 30.06.2011
(51) Int. Cl.: H02G 15/068, H01B 17/26, H01B 17/14

(54) **Vorrichtung zur Verbindung eines Hochspannungskabels mit einer Hochspannungs-Freileitung**

(71) Anmelder: Pfisterer Ixosil AG, 6460 Altdorf (CH)
(72) Erfinder: Müller, Bruno, 6454 Flüelen (CH); Mattia, Scanzio, 6776 Piotta (CH); Locher, Severin, 6374 Buochs (CH)
(74) Vertreter: Samson & Partner

(57) **Zusammenfassung**

Eine Vorrichtung (1) zur Verbindung eines isolierten Hochspannungskabels (2), das einen Leiter (13), eine Isolierung (12) und eine die Isolierung (12) umgebende leitfähige Schicht (11) aufweist, mit einer Hochspannungs-Freileitung (3). Die Vorrichtung (1) umfasst einen Trocken-Endverschluss (4), der wenigstens über einen Teil seiner Länge flexibel ist und wenigstens eine Feldsteuerelektrode (18) zur Steuerung des elektrischen Felds im Endbereich der leitfähigen Schicht (11) aufweist. Auch umfasst die Vorrichtung (1) eine Stützeinrichtung (5) mit wenigstens einem Stützarm (6) zur Stützung des flexiblen Endverschlusses (4). Im montierten Zustand verläuft der Leiter (13) des Hochspannungskabels (2) durch den Endverschluss (4) in Längsrichtung und ist am freileitungsseitigen Ende mit einer Anschlussarmatur (9) verbunden. Die Anschlussarmatur (9) ist in Längsrichtung des Endverschlusses (4) relativ zur Stützeinrichtung (5) verschiebbar geführt.

## Beschreibung

Die Erfindung betrifft eine Vorrichtung zur Verbindung eines isolierten Hochspannungskabels mit einer Hochspannungs-Freileitung.

Elektrische Energie wird unter Hochspannung über isolierte Hochspannungskabel oder Hochspannungs-Freileitungen transportiert. Hochspannungskabel weisen im Allgemeinen einen auf Erdpotential liegenden Außenleiter auf, der den dem Energietransport dienenden, Hochspannung führenden Innenleiter konzentrisch unter Zwischenschaltung einer Isolierschicht umgibt. Das gesamte elektrische Feld, welches von Hochspannung zum Erdpotential! verläuft, ist also in der im Querschnitt ringförmigen Isolierschicht zwischen Innen- und Außenleiter konzentriert; der Außenraum ist also feldfrei, anders als bei einer Freileitung, in der sich das elektrischen Feld jeweils in Abhängigkeit von der Geometrie der Umgebung vom Freileiter zu auf Erdpotential liegenden Objekten (Erdboden, Masten, Bäume, Gebäude, etc.) erstreckt. Aufgrund des feldfreien Äußeren können Hochspannungskabel in direkter Nähe zu anderen Objekten verlegt werden, ohne diese durch die Hochspannung zu gefährden. Sie werden beispielsweise als Erdkabel oder in Bodennähe eingesetzt. Hingegen müssen Hochspannungs-Freileitungen mit geeigneten Freileitungsmasten in einem der jeweiligen Hochspannung entsprechenden Sicherheitsabstand zur Umgebung gehalten werden.

Zum Übergang von Kabel auf Freileitung (und umgekehrt) dienen sog. Kabel-Endverschlüsse, oder kurz Endverschlüsse. Im Bereich des Übergangs enden der Außenleiter und die Isolierung, und das auf den engen Raum der Isolierschicht begrenzte elektrische Feld wird auf das weiter ausgreifende Feld der Freileitung überführt. Die Bezeichnung rührt daher, dass bei dem besagten Übergang das Hochspannungskabel mit seinem Feld zwischen Innen-und Außenleiter gewissermaßen verschlossen ist (tatsächlich wird der Hochspannungsleiter jedoch durch den Endverschluss geführt).

Bei einer herkömmlichen Bauart hat ein Endverschluss typischerweise ein starres Gefäß, z.B. aus Keramik oder glasfaserverstärktem Kunststoff, in dem das Ende des Hochspannungskabels und der Hochspannungs-Freileitung mit Hilfe einer Armatur elektrisch miteinander verbunden sind. Zur elektrischen Isolation ist das Keramikgefäß mit einem Isolationsöl (z.B. Silikonöl) gefüllt.

In neuerer Zeit sind auch sog. Trocken-Endverschlüsse üblich, die keine Ölfüllung aufweisen. Trocken-Endverschlüsse sind im Allgemeinen weitgehend aus flexiblem Kunststoff (z.B. Silikongummi) aufgebaut, abgesehen von der den Endverschluss durchziehenden metallischen Kabelseele und von metallischen Endarmaturen. Sie sind üblicherweise mit einer oder mehreren sog. Feldsteuerelektroden (auch "Steuerteile" oder "stress cones" genannt) ausgerüstet, die den Hochspannungsleiter im Bereich des Feldübergangs von dem im Kabel herrschenden Feld so steuern, dass dort unerwünschte Effekte wie Überschläge, Durchschläge und Teilentladungen vermieden werden.

Ein Aspekt der Erfindung betrifft eine Vorrichtung zur Verbindung eines isolierten Hochspannungskabels mit einer Hochspannungs-Freileitung (kurz "Verbindungsvorrichtung" genannt), wobei das Hochspannungskabel einen Leiter, eine Isolierung und eine die Isolierung umgebende leitfähige Schicht aufweist. Hierbei umfasst die Verbindungsvorrichtung einen Trocken-Endverschluss, der wenigstens über einen Teil seiner Länge flexibel ist und wenigstens eine Feldsteuerelektrode zur Steuerung des elektrischen Felds im Endbereich der leitfähigen Schicht aufweist. Außerdem umfasst die Verbindungsvorrichtung eine Stützeinrichtung mit wenigstens einem Stützarm zur Stützung des flexiblen Endverschlusses. Im montierten Zustand (des Kabels im Endverschluss) verläuft der Leiter des Hochspannungskabels durch den Endverschluss in Längsrichtung und ist am freileitungsseitigen Ende mit einer Anschlussarmatur verbunden. Hierbei ist die Anschlussarmatur in Längsrichtung des Endverschlusses relativ zur Stützeinrichtung verschiebbar geführt.

Ein anderer Aspekt der Erfindung betrifft ein Verfahren zur Montage (im Folgenden auch kurz "Montageverfahren" genannt) einer Vorrichtung zur Verbindung eines isolierten Hochspannungskabels mit einer Hochspannungs-Freileitung an einem Podest eines Freileitungsmasts für die Hochspannungs-Freileitung. Hierbei weist das Hochspannungskabel einen Leiter, eine Isolierung und eine die Isolierung umgebende leitfähige Schicht auf. Die Verbindungsvorrichtung umfasst einen Trocken-Endverschluss, der wenigstens über einen Teil seiner Länge flexibel ist und wenigstens eine Feldsteuerelektrode zur Steuerung des elektrischen Felds im Endbereich der leitfähigen Schicht auf. Außerdem weist der Trocken-Endverschluss eine Anschlussarmatur für den Leiter des Hochspannungskabels auf. Die Verbindungsvorrichtung umfasst auch eine Stützeinrichtung mit wenigstens einem Stützarm zur Stützung des flexiblen Endverschlusses. Der Endverschluss ist relativ zur Stützeinrichtung drehbar. Bei dem Montageverfahren erfolgen das Anschließen des Hochspannungskabels am Trocken-Endverschluss und das Vormontieren der Verbindungsvorrichtung (an einem Ort) unterhalb des Podests. Die so vormontierte Verbindungsvorrichtung wird mit dem bereits angeschlossenen Hochspannungskabel zum Podest des Freileitungsmasts angehoben und an diesem montiert, wobei eine Torsion des Hochspannungskabels durch die Relativdrehbarkeit von Endverschluss und Stützeinrichtung verhindert oder zumindest reduziert wird. Die Hochspannungs-Freileitung wird an dem Trocken-Endverschluss angeschlossen. Unter "vormontieren" ist insbesondere das Montieren des Endverschlusses an der Stützeinrichtung zu verstehen.

Die beiden Aspekte können gesondert verwirklicht werden und sind daher im Folgenden zum Teil gesondert beschrieben; die folgende Offenbarung umfasst aber auch Ausgestaltungen, bei denen beide Aspekte kombiniert sind.

Die beschriebenen Ausgestaltungen und Ausführungsformen betreffen flexible Trocken-Endverschlüsse (im Folgenden auch kurz als "Endverschluss" bezeichnet) sowie isolierte Hochspannungskabel (im Folgenden auch kurz als "Hochspannungskabel" oder "Kabel" bezeichnet) und Hochspannungs-Freileitungen (im Folgenden auch kurz als "Freileitung" bezeichnet).

"Freileitung" bezeichnet hier eine Leitung ohne geerdeten Außenleiter, der das von der Hochspannung ausgehende elektrische Feld abschirmt; hierzu gehören beispielsweise Freileitung im eigentlichen Sinn (Überlandleitungen), daneben auch nicht abgeschirmte Anschlussleiter von Transformatoren, Schaltanlagen, etc. Ein "Freileitungsmast" ist in diesem Sinne eine Vorrichtung zum Stützen bzw. Tragen wenigstens einer derartigen "Freileitung". Der Freileitungsmast dient hierbei im Wesentlichen einen bestimmten Sicherheitsabstand der Freileitung zu weiteren Objekten einzuhalten, um diese vor der an der Freileitung anliegenden elektrischen Spannung zu schützen. Der Freileitungsmast ist beispielsweise ein stabförmiger oder schalenförmiger Mast oder ein Gittermast.

"Hochspannung" wird hier in einem allgemeinen Sinn verstanden, der Mittelspannung, Hochspannung (im engen Sinn) und Höchstspannung umfasst, also von 1 kV bis zu mehreren 100 kV reicht.

Wie eingangs erwähnt wurde, wird elektrische Energie unter Hochspannung über isolierte Hochspannungskabel oder Hochspannungs-Freileitungen transportiert. Die hier betrachteten Hochspannungskabel weisen einen auf Erdpotential liegenden Außenleiter auf, der den dem Energietransport dienenden, Hochspannung führenden Innenleiter konzentrisch unter Zwischenschaltung einer Isolierschicht umgibt. Das gesamte elektrische Feld, welches von Hochspannung zum Erdpotential verläuft, ist also in der im Querschnitt ringförmigen Isolierschicht zwischen Innen- und Außenleiter konzentriert; der Außenraum ist also feldfrei, anders als bei einer Freileitung, in der sich das elektrischen Feld jeweils in Abhängigkeit von der Geometrie der Umgebung vom Freileiter zu auf Erdpotential liegenden Objekten (Erdboden, Masten, Bäume, Gebäude, etc.) erstreckt.

Wie eingangs erwähnt wurde, dient der vorliegende Verbindungsvorrichtung dem Übergang von Hochspannungskabel auf Freileitung und umgekehrt. Im Bereich des Übergangs enden der Außenleiter und die Isolierung des Hochspannungskabels, und das auf den engen Raum der Isolierschicht begrenzte elektrische Feld wird auf das weiter ausgreifende Feld der Freileitung überführt. Der Endverschluss verschließt gewissermaßen das Hochspannungskabel mit seinem Feld zwischen Innen- und Außenleiter an dem Übergang zur Freileitung, wobei der Hochspannungsleiter durch den Endverschluss geführt ist.

Anders als frühere, mit Isolieröl gefüllte Endverschlüsse sind die hier Beschriebenen Trockenendverschlüsse, die keine Flüssigkeitsfüllung aufweisen. Sie sind beispielsweise weitgehend aus flexiblem Kunststoff (z.B. Silikongummi) aufgebaut, abgesehen von der den Endverschluss durchziehenden metallischen Kabelseele und von metallischen Endarmaturen. Manche Ausgestaltungen sind mit einer oder mehreren sog. Feldsteuerelektroden ausgerüstet, die den Hochspannungsleiter im Bereich des Feldübergangs von dem im Kabel herrschenden Feld so steuern, dass dort Überschläge und auch andere unerwünschte Effekte der genannten Art vermieden werden.

Der flexible Trocken-Endverschluss umfasst bei manchen Ausgestaltungen einen Isolierkörper entlang der Längsrichtung, der im montierten Zustand (des Kabels) einen Endabschnitt des Hochspannungskabels umschließt und beispielsweise hierbei in radialer Richtung im Wesentlichen bündig am Hochspannungskabel anliegt. Dadurch ist der Trocken-Endverschluss für einen isolationsölfreien Betrieb eingerichtet. Er lässt sich mit vertikaler, schräger oder auch horizontaler Ausrichtung seiner Längsrichtung montieren und betreiben.

Als Längsrichtung wird die wesentliche Richtung des Leiters des Hochspannungskabels innerhalb des Endverschlusses zu der Anschlussarmatur hin bezeichnet (im montierten Zustand des Kabels), wobei das Kabel innerhalb des Endverschlusses im Wesentlichen geradlinig angeordnet ist. Dementsprechend wird als Längsachse des Endverschlusses eine (gedachte) Achse bezeichnet, die dort koaxial zum Leiter entlang der Längsrichtung verläuft.

Durch den Aspekt der Verschiebbarkeit der Anschlussarmatur lassen sich Längenänderungen des flexiblen Endverschlusses und/oder des darin installierten Hochspannungskabels ausgleichen, die etwa bei Temperaturänderungen auftreten.

Bei manchen Ausgestaltungen ist der Endverschluss relativ zur Stützeinrichtung drehbar, insbesondere um seine Längsachse. Hierbei ist der Endverschluss unabhängig von (einer Ausrichtung oder Montageposition) der Stützeinrichtung drehbar. Aufgrund des Aspekts der Drehbarkeit des Endverschlusses lassen sich beim Montageverfahren Torsionen im Hochspannungskabel und/oder in der Freileitung reduzieren, ohne hierzu das Kabel bzw. die Freileitung vom Endverschluss, etwa von einer Zugentlastung des Endverschlusses und/oder von der Anschlussarmatur, zu lösen. Solche Torsionen entstehen beispielsweise, wenn der Endverschluss mit dem bereits angeschlossenen Kabel beim Anheben zu seiner Montageposition am Podest oder während seiner der Montage an der Stützeinrichtung verdreht wird. Die Drehbarkeit des Endverschlusses ist also insbesondere für die Bodenmontage günstig. Außerdem lassen sich Montageschritte beim Anschluss des Hochspannungskabels im Endverschluss vereinfachen: Das Kabel lässt sich in einer beliebigen Dreh-Orientierung (bezüglich seiner Längsachse) an der Anschlussarmatur anschließen, wobei sich eine resultierende Torsion des Kabels durch geeignetes Drehen der Anschlussarmatur reduzieren lässt. Die Drehbarkeit ist für die Montage (oder auch Vormontage) des Endverschlusses bzw. der Verbindungsvorrichtung vorteilhaft, aber nicht etwa erforderlich; beispielsweise ist es nämlich möglich, das das Anschließen des Kabels und das Anheben des Endverschlusses mit bereits angeschlossenem Kabel so zu gestalten, dass Torsion des Kabels vermieden wird.

Der Endverschluss ist insbesondere für ein Hochspannungskabel eingerichtet, das aus mehreren konzentrisch angeordneten Schichten aufgebaut ist: das Innere bildet ein elektrischer Leiter, der zum Transport von elektrischer Leistung unter Hochspannung vorgesehen ist. Dieser innere Leiter ist von einer elektrischen Isolationsschicht, etwa aus Polyäthylen, umschlossen. Darauf folgt eine leitfähige Schicht als elektrische Schirmung. Diese leitfähige Schicht ist nicht (wesentlich) für den Transport der elektrischen Leistung vorgesehen, sondern bildet eine elektrische Potenzialfläche zur Abschirmung des elektrischen Felds, das von dem zentralen Leiter ausgeht. Hierzu kann die leitfähige Schicht halbleitend (im Sinne von schlecht leitend) ausgebildet sein, beispielsweise mittels leitfähiger Partikel, die in einem Kunststoff eingebettet sind, mittels einer dünnen, aufgedampften Beschichtung oder mittels einer Lackierung mit einem leitfähigen Lack. Außerdem folgt im Schichtaufbau wenigstens eine weitere äußere Schutzschicht, die im Wesentlichen eine mechanische Schutzfunktion hat.

Beim Anschließen des Hochspannungskabels an die Anschlussarmatur werden bei manchen Ausgestaltungen verschiedenen Schichten des Kabels nacheinander zum Kabelende hin stufenweise freigelegt. Hierbei wird bei einer ersten Stufe die äußere Schutzschicht entfernt und die leitfähige Schicht auf eine gewisse Länge freigelegt. Im Anschluss daran wird bei einer zweiten Stufe die leitfähige Schicht entfernt (so dass diese dort folglich endet). Schließlich wird (z.B. direkt angrenzend) vor der Anschlussarmatur bei einer dritten Stufe auch die Isolationsschicht entfernt, so dass der innere Leiter freigelegt ist, um ihn elektrisch mit der Anschlussarmatur zu kontaktieren.

Folglich endet die leitfähige Schicht, also die Abschirmung des elektrischen Felds, innerhalb des Endverschlusses (während der Leiter zur Anschlussarmatur fortgeführt ist). Hierdurch können im Endbereich der leitfähigen Schicht kritische Feldstärkenspitzen auftreten, wodurch es zu elektrischen Überschlägen kommen kann. Um dies zu verhindern ist bei manchen Ausgestaltungen der Endverschluss mit wenigstens einer entsprechend geformten Feldsteuerelektrode zur Formung des elektrischen Feldes ausgerüstet, die im Endbereich der leitfähigen Schicht angeordnet und mit ihr elektrisch leitend verbunden ist. Bei einigen Ausgestaltungen ist die Feldsteuerelektrode zur elektrischen Kontaktierung an die leitfähige Schicht gepresst, etwa indem sie ein Untermaß relativ zum Außendurchmesser (nicht der Dicke) der leitfähigen Schicht aufweist und/oder mittels einer Klemmvorrichtung verpresst ist. Die Feldsteuerelektrode umschließt beispielsweise das Kabel im Endbereich der leitfähigen Schicht radial umlaufend, wobei sie insbesondere eine rotationssymmetrische Gestalt besitzt. Mit der Feldsteuerelektrode lässt sich der Endbereich der leitfähigen Schicht wie mit einer Muffe umschließen. Bei manchen Ausgestaltungen ist die Feldsteuerelektrode aus elastischem Material gebildet, das insbesondere hinsichtlich Elastizität und/oder Wärmeausdehnung dem Isolierkörper entspricht.

Bei der Verbindungsvorrichtung wird der Endverschluss von der Stützeinrichtung gestützt, wobei bei manchen Ausgestaltungen der Stützarm parallel zum Endverschluss angeordnet ist und hierbei insbesondere im Wesentlichen dieselbe Länge wie der Endverschluss aufweist.

Bei einigen Ausgestaltungen weist die Stützeinrichtung eine freileitungsseitige und/oder eine kabelseitige Befestigungseinrichtung auf, welche den Endverschluss freileitungsseitig und/oder kabelseitig stützt. Bei manchen Ausgestaltungen ist der Endverschluss beidseitig des Isolierkörpers, etwa jeweils im Bereich seines kabelseitigen und freileitungsseitigen Endes durch die Stützeinrichtung gestützt.

Etwa für ein geringes Gewicht oder auch für geringe Abmessungen der Verbindungsvorrichtung, umfasst bei manchen Ausgestaltungen die Stützeinrichtung genau einen Stützarm. Andere Ausgestaltungen umfassen genau zwei oder genau drei Stützarme pro Endverschluss, die beispielsweise gleichmäßig verteilt um diesen angeordnet sind. Bei manchen Ausgestaltungen ist der Stützarm mit einem Isolationsmantel mit angeformten Schirmen umschlossen. Der Isolationsmantel ist beispielsweise aus Silikongummi hergestellt.

Bei manchen Ausgestaltungen ist der wenigstens eine Stützarm vollständig isolierend, wobei er beispielsweise einen starren Kernstab aus isolierendem Material umfasst. Bei anderen Ausgestaltungen ist der wenigstens eine Stützarm mit einem Überspannungsableiter ausgerüstet. Hierbei ist er zumindest für eine vorgesehene Betriebsspannung isolierend, erlaubt jedoch bei Überschreiten einer bestimmten kritischen Überspannung deren Ableitung. Bei dem Überspannungsableiter handelt es sich beispielsweise um eine Funkenstrecke und/oder um einen geeigneten Varistor, d.h. ein spannungsabhängiges Widerstandsbauteil, das bei der vorgesehenen Betriebsspannung einen sehr hohen, bei der besagten Überspannung jedoch einen relativ kleinen Widerstandswert hat.

Bei manchen Ausgestaltungen ist die Anschlussarmatur wenigstens teilweise innerhalb des Isolierkörpers des Endverschlusses angeordnet. Hierdurch lässt sich das Hochspannungskabel innerhalb des Isolierkörpers an die Anschlussarmatur anschließen, sodass es also innerhalb des Endverschlusses endet. Im Übrigen ist bei manchen Ausgestaltungen der Endverschluss, insbesondere der Isolierkörper, zusätzlich als Schutz für das Ende des Hochspannungskabels und/oder der Anschlussarmatur eingerichtet, etwa als Schutz gegen mechanische Einflüsse, Wasser, Korrosion und/oder Verschmutzung.

Bei manchen Ausgestaltungen ist die Anschlussarmatur mit einer Klemmeinrichtung zum Anschließen des Leiters des Hochspannungskabels und/oder mit einer Klemmeinrichtung zum Anschließen der Freileitung ausgerüstet. Eine solche Klemmeinrichtung umfasst beispielsweise wenigstens eine radial angeordnete Schraube und/oder eine Pressplatte, oder auch eine Ringschelle oder Drahtwicklung, mit der sich jeweils der Leiter bzw. die Freileitung gegen eine elektrische Kontaktfläche der Anschlussarmatur pressen lassen. Bei manchen Ausgestaltungen umfasst die Klemmeinrichtung eine Hülse zur Aufnahme eines Endes des Leiters und/oder der Freileitung, welche für eine radiale Verpressung (sogenanntes "crimpen") des in die Hülse eingeführten Leiters bzw. der Freileitung dimensioniert ist.

Bei manchen Ausgestaltungen umfasst die Verbindungsvorrichtung eine Spannvorrichtung mit der der Endverschluss wenigstens über den flexiblen Teil seiner Länge mit einer Spannkraft beaufschlagbar ist. Hierbei lässt sich die Spannkraft so dimensionieren, dass (trotz der Flexibilität des Endverschlusses) eine übermäßige Durchbiegung des Endverschlusses vermieden wird. Bei einigen dieser Ausgestaltungen ist die Spannvorrichtung so dimensioniert, dass der Endverschluss im montierten Zustand (der Verbindungsvorrichtung) bei Raumtemperatur mit einer gewissen Vorspannung beaufschlagt ist. Dementsprechend lässt sich die Vorspannung so wählen, dass bei thermisch bedingten Längenänderungen des Endverschlusses dieser stets mit wenigstens einer Mindestspannkraft beaufschlagt ist.

Bei manchen Ausgestaltungen umfasst die Spannvorrichtung wenigstens eine Feder zur Erzeugung der Spannkraft, etwa eine Schraubenfeder. Bei einigen dieser Ausgestaltungen ist die wenigstens eine Feder eine Druckfeder, die insbesondere so montiert ist, dass die Feder gestaucht wird, falls sich der flexible Endverschluss (etwa aufgrund thermischer Einflüsse) verkürzt. Bei alternativen Ausgestaltungen ist die wenigstens eine Feder eine Zugfeder, die insbesondere so montiert ist, dass die Feder gestreckt wird, falls sich der flexible Endverschluss verkürzt. Weitere Ausgestaltungen hinsichtlich der Spannvorrichtung werden später erläutert.

Die Anschlussarmatur ist bei manchen Ausgestaltungen mit einem Bolzen ausgerüstet, der entlang der Längsrichtung des Endverschlusses mittels der Stützeinrichtung verschiebbar geführt ist. Hierbei lässt sich mit dem Bolzen die Anschlussarmatur entlang der Längsrichtung relativ zur Stützeinrichtung verschieben und gleichzeitig quer dazu halten. Im Übrigen lässt sich so der Endverschluss über den Bolzen an der Stützeinrichtung montieren.

Wie bereits genannt, ist bei manchen Ausgestaltungen hierfür am freileitungsseitigen Ende der Stützeinrichtung die Befestigungseinrichtung am Stützarm angeordnet. Bei einigen dieser Ausgestaltungen weist die Befestigungseinrichtung eine Durchgangsöffnung für den Bolzen auf, wobei der Bolzen beidseitig aus der Durchgangsöffnung herausragt, also die Befestigungseinrichtung in Längsrichtung verschiebbar durchdringt. Im Übrigen weist der Bolzen bei manchen Ausgestaltungen einen kreisförmigen oder alternativ auch einen nichtkreisförmigen Querschnitt auf.

Bei manchen Ausgestaltungen ist die Freileitung und/oder die Hochspannungsleitung stirnseitig am Bolzen anschließbar, etwa mit der zuvor genannten Klemmeinrichtung. Hierbei ist stirnseitig auch so zu verstehen, dass das Kabel beziehungsweise die Freileitung mit dem Bolzen einen gewissen Überlappungsbereich entlang der Längsrichtung des Endverschlusses aufweisen.

Bei manchen Ausgestaltungen sind das Hochspannungskabel und die Freileitung entlang der Längsrichtung auf jeweils unterschiedlichen Seiten der Befestigungseinrichtung an der Anschlussarmatur anschließbar.

Bei manchen Ausgestaltungen sind das Hochspannungskabel und/oder die Freileitung (im Bereich des Endverschlusses) koaxial zum Bolzen angeordnet, insbesondere koaxial zur Längsachse, die gleichzeitig die Drehachse zum Drehen Anschlussarmatur ist. Bei manchen Ausgestaltungen ist der Bolzen also zwischen dem Hochspannungskabel und der Freileitung angeordnet. Hierbei lässt sich die elektrische Leistung wenigstens teilweise über den Bolzen zwischen dem Kabel und der Freileitung übertragen. Im Übrigen ist bei manchen Ausgestaltungen die Anschlussarmatur im Wesentlichen durch den Bolzen gebildet. Bei manchen Ausgestaltungen ist der Bolzen wenigstens abschnittsweise eine in der freileitungsseitigen Befestigungseinrichtung drehbar gelagerte Welle, die insbesondere auch relativ zur Befestigungseinrichtung in Längsrichtung verschiebbar ist. Hierbei weist der Bolzen ein kreisförmiges Querschnittsprofil auf.

Die Spannvorrichtung ist bei manchen Ausgestaltungen an der Stützeinrichtung, insbesondere an der freileitungsseitigen Befestigungseinrichtung, und gleichzeitig am Bolzen der Anschlussarmatur angeordnet, und zwar so, dass der Bolzen mit der Spannkraft und die Stützeinrichtung mit einer resultierenden Gegenkraft beaufschlagt sind. Hierbei ist die Spannvorrichtung (zumindest funktional oder auch räumlich) zwischen der Stützeinrichtung und dem Bolzen angeordnet.

Manche Ausgestaltungen weisen mehrere, beispielsweise zwei, drei, vier, fünf oder sechs Federn der Spannvorrichtung auf, die nebeneinander, also parallel wirkend, angeordnet sind. Hierbei lassen sich die Federn, insbesondere gleichmäßig verteilt, auf einem Radius um die Längsachse des Endverschlusses anordnen, und zwar insbesondere um den Bolzen. Bei anderen Ausgestaltungen ist die Spannvorrichtung mit genau einer Feder ausgerüstet, welche konzentrisch zum Bolzen angeordnet ist, insbesondere wobei dieser in die Feder axial hineintaucht oder auch die Feder axial durchdringt.

Bei manchen Ausgestaltungen ist die Spannvorrichtung so eingerichtet, dass bezüglich des flexiblen Teils des Endverschluss die Spannkraft freileitungsseitig am Endverschluss angreift, wobei die Spannkraft vom Endverschluss aus gesehen in Richtung zum freileitungsseitigen Ende hin wirkt, der Endverschluss also (dorthin) gezogen wird.

Insgesamt ist bei manchen Ausgestaltungen die Anschlussarmatur im Wesentlichen als Bolzen ausgeführt, der beidseitig in Längsrichtung des Endverschlusses gesehen zum Anschließen des Hochspannungskabels und der Freileitung ausgerüstet ist. Außerdem ist der Bolzen als Welle in der freileitungsseitigen Befestigungseinrichtung der Stützeinrichtung drehbar und gleichzeitig in Längsrichtung des Endverschlusses relativ zur Stützeinrichtung verschiebbar gelagert. Hierbei ist mittels des Bolzens ebenso der Endverschluss selbst drehbar und in seiner Längsrichtung verschiebbar an der Stützeinrichtung befestigt. Zusätzlich wird der flexible Endverschluss entlang seiner Längsrichtung durch die Spannvorrichtung gespannt, welche die Spannkraft zwischen dem Bolzen und der Stützeinrichtung aufbaut.

Um die Spannkraft zuverlässig aufzubauen, ist bei manchen Ausgestaltungen der Endverschluss zusätzlich (zu der freileitungsseitigen Befestigungseinrichtung) an einer kabelseitigen Befestigungseinrichtung der Stützeinrichtung befestigt, wobei er beispielsweise bezüglich des flexiblen Teils seiner Länge gegenüberliegend von der Anschlussarmatur befestigt ist.

Bei einigen dieser Ausgestaltungen ist der Endverschluss an der kabelseitigen Befestigungseinrichtung bezüglich seiner Längsrichtung relativ zur Stützeinrichtung festgelegt, also dort nicht in Längsrichtung verschiebbar geführt. Folglich ist in diesem Fall der Endverschluss in Längsrichtung gesehen kabelseitig festgelegt und freileitungsseitig verschiebbar befestigt, so dass er dazwischen (insbesondere über den flexiblen Teil seiner Länge) durch die Spannvorrichtung spannbar ist.

Wie zuvor genannt, ist der Endverschluss bei manchen Ausgestaltungen ist um seine Längsachse drehbar an der Stützeinrichtung befestigt. Dementsprechend ist der Endverschluss bei einigend dieser Ausgestaltungen an beiden Befestigungseinrichtungen der Stützeinrichtung drehbar befestigt.

Bei manchen Ausgestaltungen ist der Endverschluss entsprechend der Norm "IEC 60840" und/oder der Norm "IEC 62067" ausgerüstet. Bei manchen Ausgestaltungen ist der Endverschluss für eine elektrische Spannung von (bis zu) 52 kV, 72,5 kV, 123 kV, 145 kV, 170 kV, 245 kV, 300 kV, 400 kV oder 550 kV dimensioniert. Hierbei ist unter anderem die Länge des flexiblen Teils des Endverschlusses geeignet gewählt, um einen elektrischen Überschlag, etwa zwischen seinem freileitungs- und kabelseitigen Ende, zu verhindern. Im Übrigen ist ein solcher Endverschluss auch für ein spannungsmäßig entsprechend dimensioniertes Hochspannungskabel ausgerüstet, also für ein Hochspannungskabel, das für eine elektrische Spannung von (bis zu) 52 kV, 72,5 kV, 123 kV, 145 kV, 170 kV, 245 kV, 300 kV, 400 kV oder 550 kV vorgesehen ist. Ferner ist bei manchen Ausgestaltungen der Endverschluss für eine Wechselspannung und/oder eine Gleichspannung ausgerüstet, insbesondere für die zuvor genannten Spannungswerte.

Bei manchen Ausgestaltungen ist der Isolierkörper aus separaten Segmenten zusammengesetzt, die beispielsweise auf das Kabel, die Feldsteuerelektrode und/oder die Anschlussarmatur aufgeschoben und miteinander verklebt sind. Bei alternativen Ausgestaltungen ist der Isolierkörper einteilig hergestellt. Der Isolierkörper des Endverschlusses ist bei manchen Ausgestaltungen aus Silikon, insbesondere aus Silikongummi, gefertigt.

Bei manchen Ausgestaltungen ist der flexible Teil des Endverschlusses im Wesentlichen durch den Isolierkörper gebildet. Hierbei oder auch bei anderen Ausgestaltungen lässt sich die Feldsteuerelektrode vollständig im Isolierkörper anordnen. Bei einigen Ausgestaltungen erstreckt sich der flexible Teil des Endverschlusses im montierten Zustand der Verbindungsvorrichtung im Wesentlichen von der kabelseitigen bis zur freileitungsseitigen Befestigungseinrichtung der Stützeinrichtung.

Bei manchen Ausgestaltungen umfasst der Endverschluss eine Halteeinrichtung für das Hochspannungskabel an seinem kabelseitigen Ende. Hierzu ist die Halteeinrichtung beispielsweise mit einer Klemmeinrichtung für eine äußerste Schicht, etwa die Schutzschicht, des Hochspannungskabels ausgerüstet. Insbesondere ist die Halteeinrichtung eine Zugentlastung, die das Hochspannungskabel relativ zum Endverschluss entlang der Längsrichtung festlegt, sodass dort das Kabel relativ zum Endverschluss nicht in Längsrichtung verschiebbar ist.

Bei manchen Ausgestaltungen ist der Endverschluss wenigstens entlang des flexiblen Teils seiner Länge mit wenigstens einem äußeren, umlaufenden Vorsprung (Schirm) ausgerüstet. Der wenigstens eine Schirm dient etwa dazu, Wasser von der Oberfläche des Endverschlusses abtropfen zu lassen und/oder die elektrische Kriechstrecke entlang des Endverschlusses zu verlängern. Bei einigen dieser Ausgestaltungen ist der Endverschluss mit einer Vielzahl von Schirmen ausgestattet, beispielsweise sind mindestens vier, acht, zwölf oder 16 Schirme entlang der Längsrichtung des Endverschlusses aufeinanderfolgend angeordnet. Die Schirme sind wegen der dauerhaft wasserabstoßenden und selbstreinigenden Eigenschaft von Silikonoberflächen z.B. aus Silikongummi hergestellt.

Bei manchen Ausgestaltungen umfasst die Stützeinrichtung eine Montageeinrichtung für die Montage der Verbindungsvorrichtung am Podest des Freileitungsmasts. Hierbei ist bei manchen Ausgestaltungen die kabelseitige Befestigungseinrichtung zumindest teilweise als Bestandteil der Montageeinrichtung realisiert.

Im montierten Zustand der Verbindungsvorrichtung ist bei manchen Ausgestaltungen die Montageeinrichtung gegenüber dem Leiter und der leitfähigen Schicht des Hochspannungskabels elektrisch isoliert angeordnet. Zusätzlich oder alternativ ist bei manchen Ausgestaltungen die Montageeinrichtung mit wenigstens einem Stützisolator ausgerüstet, über den sich die Verbindungsvorrichtung gegenüber dem Podest abstützten lässt. Dadurch lassen sich das Podest (und auch der Freileitungsmast), der Leiter und auch die leitfähige Schicht des Hochspannungskabels auf jeweils unterschiedlichen elektrischen Potentialen betreiben. Bei einigen Ausgestaltungen umfasst die Verbindungsvorrichtung mehrere, insbesondere drei oder vier, solche Stützisolatoren, die als Füße der Verbindungsvorrichtung eingerichtet sind und mit denen sich die Verbindungsvorrichtung auf das Podest absetzen und befestigen lässt. Hierzu sind die Stützisolatoren beispielsweise mit podestseitigen Schraubbolzen oder Gewindebohrungen ausgerüstet. Bei manchen Ausgestaltungen umfasst die Montageeinrichtung eine Grundplatte, an der der Stützarm, der Endverschluss und der wenigstens eine Stützisolator als Fuß gemeinsam montiert sind.

Bei manchen Ausgestaltungen umfasst der Endverschluss eine Kontakteinrichtung, um bedarfsweise die leitfähige Schicht des Hochspannungskabels elektrisch zu kontaktieren. So lassen sich (bei Bedarf) beispielsweise die elektrischen Potentiale etwa der Montageeinrichtung und/oder des Freileitungsmasts und das elektrische Potential der elektrischen Schicht angleichen, insbesondere auch erden.

Bei manchen Ausgestaltungen lässt sich an einem Freileitungsmast wenigstens eine Vorrichtung zum Verbinden eines Kabels mit einer Freileitung montieren. Bei einigen dieser Ausgestaltungen ist pro Freileitungsmast die Montage von genau drei solchen Verbindungsvorrichtungen vorgesehen oder auch von einem Vielfachen davon. Dies ist beispielsweise für den Transport von dreiphasigem Wechselstrom unter Hochspannung vorteilhaft.

Unter dem Podest des Freileitungsmasts ist eine mechanische Haltevorrichtung für wenigstens eine Verbindungsvorrichtung zu verstehen. Bei manchen Ausgestaltungen ist das Podest ein horizontal, vertikal oder auch schräg angeordneter Träger, an dem sich wenigstens eine Verbindungsvorrichtung befestigen lässt.

Was den vorliegend auch beschriebenen Montageaspekt betrifft, sei angemerkt, dass die Montage der früher verbreiteten ölgefüllte Endverschlusses in der Regel unmittelbar an dem für den späteren Betrieb vorgesehenen Aufstellort erfolgte. So wurde z.B. bei Anbringung auf einem Freileitungsmast das Keramikgefäß zunächst auf dem Freileitungsmast montiert; dann werden die Leiter auf dem Mast verbunden und das Keramikgefäß ölgefüllt. Auch Trocken-Endverschlüsse werden bis heute üblicherweise unmittelbar an dem für den späteren Betrieb vorgesehenen Aufstellort, also z.B. auf einem Freileitungsmast mit dem Kabel verbunden.

Die Montage unmittelbar an dem besagten Aufstellort ist aber relativ aufwändig. Bei manchen Ausgestaltungen des Montageverfahrens erfolgt das Anschließen des Hochspannungskabels im Endverschluss am Boden (auch kurz "Bodenmontage" genannt). Dies erleichtert die Anschlussarbeiten. Wenn die vormontierte Verbindungsvorrichtung mit dem bereits angeschlossenen Hochspannungskabel z.B. zum Podest des Freileitungsmasts angehoben und mit der Stützeinrichtung in einer bestimmten Position an diesem montiert würde, käme es bei einer herkömmlichen Verbindungsvorrichtung in der Regel zu einer Torsion des Hochspannungskabels. Wegen der Relativdrehbarkeit von Endverschluss und Stützeinrichtung kann sich bei dem hier beschriebenen Montageverfahren das Kabel samt des undrehbar daran angeschlossenen Endverschlusses gegenüber der Stützeinrichtung frei drehen, so dass bei der Montage der Stützeinrichtung unter beliebigem Drehwinkel auf dem Mast eine Torsion des Kabels vermieden oder zumindest gegenüber einer Verbindungsvorrichtung ohne Relativdrehbarkeit reduziert wird.

Die angefügte Zeichnung veranschaulicht nun beispielhaft Ausführungsformen. In der Zeichnung zeigen:
Fig. 1: eine Seitenansicht einer Vorrichtung zum Verbinden eines Hochspannungskabels mit einer Freileitung
Fig. 2a und 2b: jeweils einen vergrößert dargestellten Ausschnitt von Fig. 1,
Fig. 3: eine Draufsicht auf die Verbindungsvorrichtung gemäß Fig. 1 und
Fig. 4: ein Verfahren zur Montage der Verbindungsvorrichtung an einem Freileitungsmast.

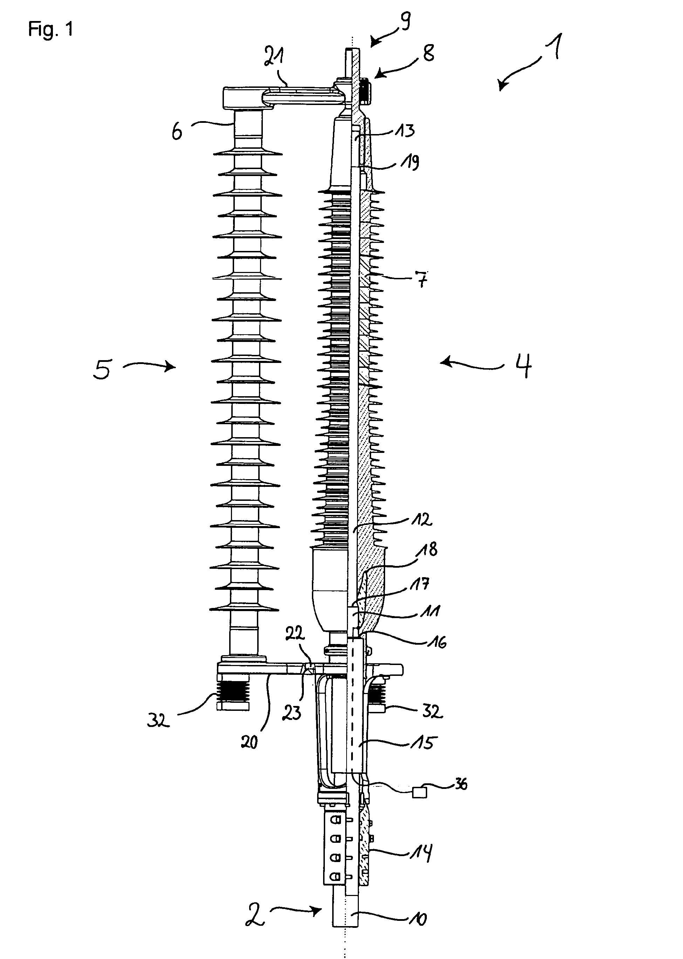

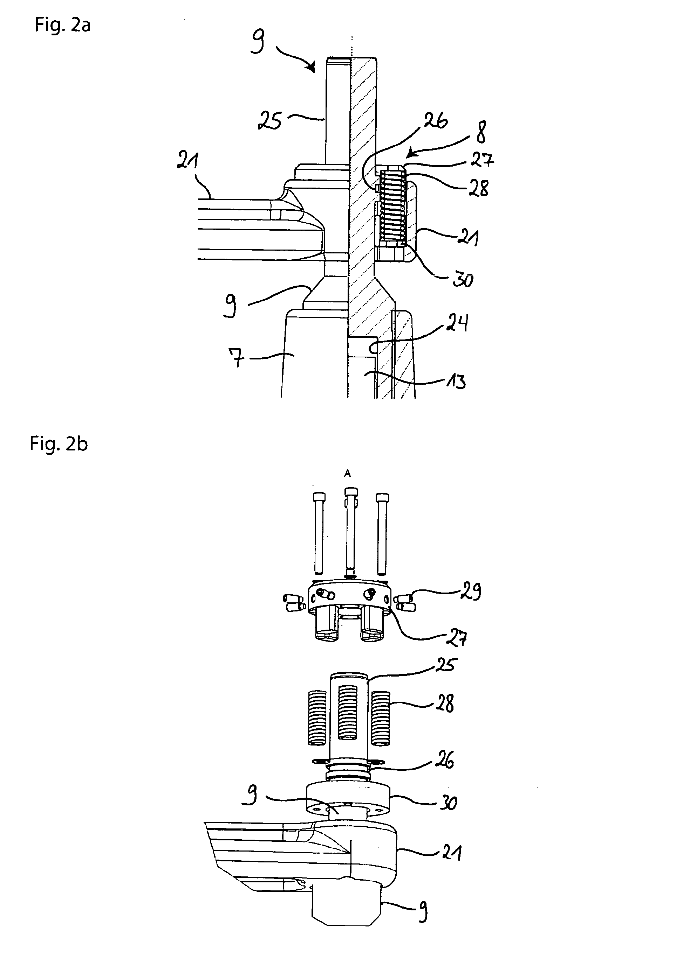

Die Vorrichtung 1 zum Verbinden eines Hochspannungskabels 2 mit einer Freileitung 3 ist in der Fig. 1 als Seitenansicht mit partieller Schnittansicht dargestellt, wobei die Schnittflächen schraffiert gezeichnet sind. Die Fig. 1 sowie die Fig. 2a und 2b zeigen die Verbindungsvorrichtung 1 in montiertem Zustand mit bereits angeschlossenem Hochspannungskabel 2. Hierbei ist die Freileitung 3 (noch) nicht an die Verbindungsvorrichtung 1 angeschlossen und die Verbindungsvorrichtung 1 auch (noch) nicht an ein Podest 33 eines Freileitungsmasts 34 montiert.

Die Verbindungsvorrichtung 1 ist für eine (maximale) Hochspannung dimensioniert, die in einem Bereich von 52 kV bis 550 kV liegt, und umfasst im Wesentlichen einen flexiblen Endverschluss 4 und eine Stützeinrichtung 5 mit genau einem isolierenden Stützarm 6 zur Stützung des flexiblen Endverschlusses 4.

Der flexible Endverschluss 4 ist ein Trocken-Endverschluss der ohne Isolationsöl betreibbar ist. Zwischen seinen Enden, die hauptsächlich zur Befestigung des Endverschlusses 4 selbst sowie zur Befestigung und zum Anschluss des Kabels 2 und zum Anschluss der Freileitung 3 ausgerüstet sind, besitzt der Endverschluss 4 einen flexiblen Isolierkörper 7 aus Silikon, der dem Endverschluss 4 seine Flexibilität verleiht. Der flexible Endverschluss 4 ist entlang seiner Längsrichtung mit einer Spannvorrichtung 8 gespannt, wobei er an seinem freileitungsseitigen Ende relativ zur Stützeinrichtung 5 in Längsrichtung verschiebbar geführt ist. Dies und die Spannvorrichtung 8 werden später anhand von Fig. 2a und 2b näher erläutert, während zunächst der allgemeine Aufbau der Verbindungsvorrichtung 1 beschrieben wird.

Die Fig. 1 zeigt den montierten Zustand (des Kabels) und den vormontierten Zustand der Verbindungsvorrichtung 1, bei denen das Hochspannungskabel 2 an einer Anschlussarmatur 9 des Endverschlusses 4 angeschlossen ist und der Endverschluss 4 selbst an der Stützeinrichtung 5 montiert ist.

Das Hochspannungskabel 2, dass in der Fig. 1 von unten an die Verbindungsvorrichtung 1 herangeführt ist, besitzt einen mehrschichtigen Aufbau aus konzentrischen Schichten, nämlich von außen nach innen betrachtet eine äußere Schutzschicht 10, eine leitfähige Schicht 11, einer Isolationsschicht 12 und einen inneren Leiter 13, der für den Transport von elektrischer Leistung vorgesehen ist. Entlang der Längsrichtung des Endverschlusses 4 sind diese Schichten bis auf den Leiter 13 zu der Anschlussarmatur 9 hin stufenweise entfernt, um das Kabel wie nachfolgend erläutert anzuschließen.

Zur Zugentlastung ist am kabelseitigen Ende des Endverschlusses 4 das Kabel 2 an seiner äußeren Schutzschicht 10 mit einer radial anpressbaren Klemme 14 (sogenannte Bride) befestigt und so in Längsrichtung relativ zu dem Endverschluss 4 fixiert. In dem gezeigten Ausführungsbeispiel ist das Kabel 2 im Bereich des Eintritts in den Isolierkörper 7 optional mit einem Schrumpfschlauch 15 ummantelt.

Innerhalb des Isolierkörpers 7 ist bei einer ersten Stufe 16 die äußere Schutzschicht 10 entfernt, so dass die leitfähige Schicht 11 freigelegt ist. Diese leitfähige Schicht 11 dient der elektrischen Abschirmung des elektrischen Felds, das von der Hochspannung des inneren Leiters 13 ausgeht. Folglich endet an einer nächsten Stufe 17, an der die leitfähige Schicht 11 endet, auch die Abschirmung. Um unerwünscht hohe Feldstärken im Endbereich der leitfähigen Schicht 11 zu vermeiden, ist innerhalb des Isolierkörpers 7 eine Feldsteuerelektrode 18 über das Kabel 2 geschoben. Hierbei ist die Feldsteuerelektrode 18 aus an seiner Oberfläche oder durchgängig mit leitfähigen Partikeln versetztem Silikongummi gefertigt (also selbst zumindest an der Oberfläche leitfähig), wobei sie aufgrund ihres geringfügigen Untermaßes relativ zum Durchmesser der leitfähigen Schicht 11 auf diese gepresst und somit elektrisch leitend mit dieser verbunden ist. Durch geeignete Formgebung der Feldsteuerelektrode 18 lässt sich die Form des elektrischen Felds so steuern, dass die elektrische Feldstärke im Endbereich der leitfähigen Schicht 11 einen kritischen Wert nicht überschreitet, so dass sich elektrische Überschläge zuverlässig vermeiden lassen.

Im Anschluss an die Stufe 17 sind noch der innere Leiter 13 und die Isolationsschicht 12 durch einen zentral angeordneten Durchführungskanal des Isolierkörpers 7 bis zu der Anschlussarmatur 9 hin fortgeführt. Unmittelbar vor der Anschlussarmatur 9 ist in einer letzten Stufe 19 die Isolationsschicht 12 entfernt und der so freigelegte innere Leiter 13 elektrisch leitend an der Anschlussarmatur 9 angeschlossen.

Im Übrigen ist der Isolierkörper 7 aus mehreren (hier beispielsweise vier) Einzelteilen entlang der Längsrichtung zusammengesetzt, welche beim Anschließen des Hochspannungskabels 2 an den Endverschluss 4 nacheinander auf das Kabel 2 aufgeschoben und miteinander verklebt werden. Bei anderen Ausführungsbeispielen ist der Isolierkörper aus einer größeren oder auch einer geringeren Anzahl von Teilstücken zusammengesetzt. Bei noch anderen Ausführungsbeispielen ist der Isolierkörper einteilig gebildet.

Beim gezeigten Ausführungsbeispiel ist außerdem der Isolierkörper 7 mit einer Vielzahl von umlaufenden Schirmen ausgerüstet, die einteilig am Isolierkörper 7 angeformt sind. Diese Schirme dienen beispielsweise zum Abtropfen von Wasser von der äußeren Oberfläche des Endverschlusses 4 und auch zur Verlängerung der elektrischen Kriechstrecke zwischen dem freileitungsseitigen und dem kabelseitigen Ende des Isolierkörpers 7. Optional sind bei diesem Ausführungsbeispiel aufeinanderfolgende Schirme alternierend mit unterschiedlichen Durchmessern ausgebildet.

Der Stützarm 6 der Stützeinrichtung 5 ist ein starrer selbsttragender Isolator, der in diesem Ausführungsbeispiel im Wesentlichen durch einen isolierenden Kernstab, z.B aus gehärtetem Kunstharz mit Faserarmierung, beispielsweise aus Glasfasern gebildet wird, der von einem äußeren Isolationsmantel aus Silikongummi mit angeformten Schirmen umschlossen ist. Hierbei dienen die Schirme insbesondere auch dem zuvor genannten Zweck der Schirme des Isolierkörpers 7. Bei anderen Ausführungsbeispielen ist der Stützarm 6 aus einer Vielzahl von isolierenden Segmenten zusammengesetzt, die jeweils einen Schirm und ein Distanzstück umfassen.

Zur Stützung des Endverschlusses 4 ist der Stützarm 6 beidseitig jeweils über eine Befestigungseinrichtung 20, 21 der Stützeinrichtung 5 mit dem Endverschluss 4 gekoppelt. Hierbei ist der Endverschluss 4 an seinem kabelseitigen Ende mit einer Drehscheibe 22 ausgerüstet, so dass er dort zwar entlang der Längsrichtung festgelegt (also nicht verschiebbar), jedoch frei um seine Längsachse drehbar ist. Die Drehscheibe 22 ist auf Gleitelementen 23 gelagert. Bei manchen Ausführungsformen ist sie in einer beliebigen Drehposition bezüglich der Befestigungseinrichtung 20 arretierbar.

Die freileitungsseitige Befestigungseinrichtung 21 ist in den Fig. 2a und 2b vergrößert dargestellt, wobei die Fig. 2a eine Seitenansicht mit partieller Schnittansicht und die Fig. 2b eine Explosionsdarstellung zeigen.

Bevor die Befestigung des Endverschlusses 4 näher erläutert wird, wird zuerst die Anschlussarmatur 9 behandelt, die im Wesentlichen ein Bolzen 9 ist. Kabelseitig besitzt die Anschlussarmatur 9 an ihrer Stirnseite einer Ausnehmung 24, in die der innere Leiter 13 des Hochspannungskabels 2 im montierten Zustand eingeführt ist. Zur elektrischen Kontaktierung und mechanischen Befestigung ist der innere Leiter 13 mit Schrauben quer zur Längsrichtung in der Ausnehmung 24 verpresst. Freileitungsseitig hat die Anschlussarmatur 9 einen Schraubbolzen 25, an dem das Ende der Freileitung 3 anschließbar ist.

Außerdem ist der Schraubbolzen 25 als eine Welle ausgeführt, die in einer Durchgangsöffnung der Befestigungseinrichtung 21 sowohl um die Längsachse des Endverschlusses 4 drehbar gelagert ist als auch in Längsrichtung des Endverschlusses 4 verschiebbar geführt ist.

Hierbei wird die Anschlussarmatur 9 mittels der Spannvorrichtung 8 in Richtung des freileitungsseitigen Endes des Endverschlusses (4) mit einer Spannkraft beaufschlagt. Da die Anschlussarmatur 9 in dem Isolierkörper 7 teilweise eingeschlossen und hierdurch gehalten ist, wird die Spannkraft über die Anschlussarmatur 9 auf den gesamten Endverschluss 4 übertragen. Somit lässt sich der flexible Endverschluss 4 spannen, um eine übermäßige Durchbiegung quer zu seiner Längsrichtung zu verhindern.

Zur Erzeugung der Spannkraft ist in einer Ausnehmung 26 des Schraubbolzens 25 ein Gegenlager 27 für insgesamt vier, parallel angeordnete Druckfedern 28 mittels Schrauben 29 befestigt, wobei die Druckfedern 28 jeweils gegenüberliegend an einem weiteren Gegenlager 30 an der Befestigungseinrichtung 21 anliegen. Somit wirkt die Spannkraft der Druckfedern 28 zwischen der freileitungsseitigen Befestigungseinrichtung 21 und der Anschlussarmatur 9, so dass diese in Richtung des freileitungsseitigen Endes gedrückt wird.

Insgesamt lassen sich hierdurch thermische Ausdehnungen entlang des Endverschlusses 4 durch die Verschiebbarkeit der Anschlussarmatur 9 entlang der Längsrichtung relativ zur Stützeinrichtung 5 ausgleichen. Außerdem lassen sich gewisse Längentoleranzen des flexiblen Endverschlusses 4 ausgleichen, die beispielsweise durch dessen Fertigung oder auch durch Toleranzen beim Anschließen des Kabels 2 bedingt sind. Im Übrigen sind der Endverschluss 4, die Stützeinrichtung 5 und die Spannvorrichtung 8 so konstruiert, dass bei Raumtemperatur der Endverschluss 4 mit einer Spannkraft entsprechend einer Gewichtskraft durch eine Masse von etwa 250 kg vorgespannt ist.

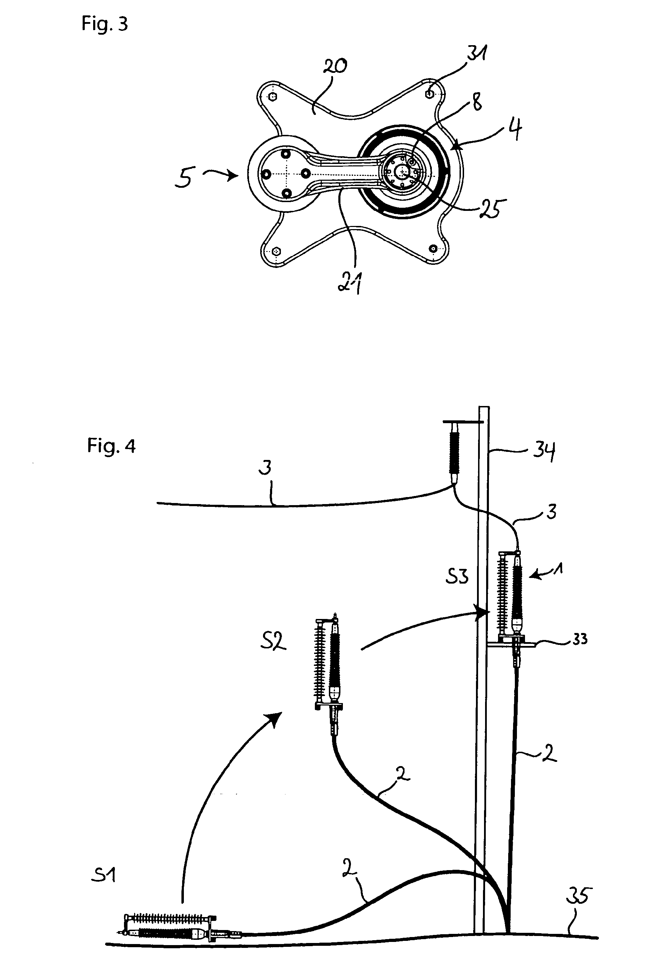

Die freileitungsseitige Befestigungseinrichtung 21 ist stirnseitig auf den Stützarm 6 aufgeschraubt, wie in der Draufsicht aus Richtung der Freileitung 3 in Fig. 3 zu sehen ist. Weiter zeigt Fig. 3 vier Befestigungsschrauben 31 an jeweiligen Positionen von Isolator-Füßen 32, die in Fig. 1 gezeigt sind. Hierbei sind die Isolator-Füße 32 an der kabelseitigen Befestigungseinrichtungen 20 angeordnet und ermöglichen es, die gesamte Verbindungsvorrichtung 1 elektrisch isoliert zu montieren, und zwar beispielsweise auf dem Podest 33 des Freileitungsmasts 34. Die Befestigungseinrichtung 20 bildet dabei eine Basis (Montageeinrichtung), an die der Endverschluss 4, Stützarm 6 und die Isolator-Füße 32 gemeinsam montiert sind. So lässt sich der innere Leiter 13, die leitfähige Schicht 11 und das Podest 33 auf unterschiedlichen elektrischen Potentialen betreiben. Um beispielsweise das Podest 33 auf demselben elektrischen Potential der leitfähigen Schicht 11 zu betreiben, ist aus dem Isolierkörper 7 eine elektrische Leitung 36 herausgeführt, welche mit der leitfähigen Schicht 11 elektrisch leitend verbunden ist und die sich mit dem Podest 33 elektrisch verbinden lässt.

Ein weiteres Ausführungsbeispiel bezieht sich auf ein Verfahren zur Montage der zuvor beschriebenen Verbindungsvorrichtung 1. Hierbei werden letztlich das Hochspannungskabel 2 und die Freileitung 3 durch die Verbindungsvorrichtung 1 am Podest 33 des Freileitungsmasts 34 miteinander verbunden. Das Hochspannungskabel 2 ist bei diesem Ausführungsbeispiel ein Erdkabel, welches aus dem Boden 35 neben dem Freileitungsmast 34 austritt.

Das Montageverfahren ist mittels überlagerter Momentaufnahmen in der Fig. 4 dargestellt, wobei die zeitliche Abfolge der Montage durch Pfeile gekennzeichnet ist. In einem ersten Montagestadium S1 erfolgt das Anschließen des Hochspannungskabels 2 im Endverschluss 4 am Boden 35 (Bodenmontage). Hierbei werden der Endverschluss 4 und das Kabel unverdrehbar miteinander verbunden. Die Anschlussarbeiten müssen nicht unmittelbar auf einem Erd- oder Fußboden 35 erfolgen; Bodenmontage kann z.B. auch auf einem Arbeitstisch o.ä. erfolgen, der (im Wesentlichen) auf Bodenniveau bezüglich des Freileitungsmasts 34 steht. Der Monteur braucht sich nicht auf das Höhenniveau des Podests 33 begeben, um das Hochspannungskabels 2 anzuschließen, und die Verbindungsvorrichtung braucht noch nicht in ihrer späteren Endposition montiert sein.

Außer dem Anschließen des Hochspannungskabels 2 wird auch die Verbindungsvorrichtung 1 selbst in Bodenmontage vormontiert, wobei der Endverschluss 4 und die Stützeinrichtung 5 aneinander montiert werden. Hierbei lässt sich das Anschließen des Hochspannungskabels 2 (im Vergleich zur Montage von herkömmlichen Endverschlüssen) vereinfacht ausführen, da nur größere Längentoleranzen der genannten Stufen eingehalten werden müssen. Eine hieraus resultierende Längentoleranz des flexiblen Endverschlusses 4 lässt sich einfach über die Verschiebbarkeit der Anschlussarmatur 9 ausgleichen.

Erst nach dieser Vormontage wird Verbindungsvorrichtung 1 in einem zweiten Montagestadium S2 mit dem dann bereits angeschlossenen Hochspannungskabel 2 auf die gewünschte Montagehöhe des Podests 33 am Freileitungsmast 34 angehoben. Dies lässt sich etwa mit einem Kran oder einem am Freileitungsmast 34 befestigten Seilzug bewerkstelligen. Hierzu sind an der Verbindungsvorrichtung 1 geeignete Kran-Ösen angebracht.

Daraufhin wird die Verbindungsvorrichtung 1 in einem dritten Montagestadium S3 auf dem Podest 34 auf ihren Isolator-Füßen 32 abgesetzt und an diesen mit dem Podest 34 verschraubt, so dass also die Stützeinrichtung 5 mit einer bestimmten, nicht frei wählbaren Winkelorientierung am Mast 34 befestigt wird. Beim Anschließen des Kabels 2 und Anheben der Verbindungsvorrichtung 1 könnte - wenn keine Relativdrehbarkeit zwischen der Stützeinrichtung 5 und Hochspannungskabel 2 vorhanden wäre - eventuell Torsion im Hochspannungskabel 2 auftreten. Das Stützeinrichtung 5 und Hochspannungskabel 2 aber relativdrehbar sind, führen die einer Torsion entgegenwirkenden Kräfte dazu, dass sich der Endverschluss 4 samt dem Kabel 2 soweit um seine Längsachse (relativ zur Verbindungsvorrichtung 1) dreht, dass die Torsion ganz oder weitgehend vermieden wird. Mit dem Endverschluss 4 wird auch die Anschlussarmatur 9 mitgedreht, da diese über den Isolierkörper 7 fest mit dem Endverschluss 4 verbunden ist. Bei manchen Ausführungsformen kann anschließend die Drehscheibe 22 (und somit der Endverschluss 4) gegen Drehung arretiert werden; bei anderen Ausführungsformen bleibt die besagte Relativdrehbarkeit auch nach der erfolgten Montage bestehen, um z.B. durch Kabelausdehnung hervorgerufene Torsionen abzubauen.

Ferner wird in diesem Montagestadium S3 auch die Hochspannungs-Freileitung 3 an der Anschlussarmatur 9 angeschlossen, ggf. nachdem der Endverschluss 4 hinsichtlich seiner Drehbarkeit arretiert wurde. Hierzu wird Freileitung 3 beispielsweise ein Stück weit überlappend mit dem Schraubbolzen 25 angeordnet und mittels einer um den Schraubbolzen 25 und die Freileitung 3 umlaufenden Drahtwicklung oder einer Schelle an diesen gepresst, um sie zu befestigen und elektrisch zu verbinden.

Dieses Montageverfahren ermöglicht es, dass nur relativ wenige Montageschritte auf dem Höhenniveau des Podests 33 ausgeführt werden müssen. Außerdem erfordern diese Montageschritte nur geringen Aufwand, nämlich im Wesentlichen bloß die Befestigung der vier Isolator-Füße 32, ggf. die Arretierung der Drehscheibe 20 und der Anschluss der Freileitung 3. Hingegen erfolgt das Anschließen des Kabels 2 am Boden 35.

## Patentansprüche

1. Vorrichtung (1) zur Verbindung eines isolierten Hochspannungskabels (2), das einen Leiter (13), eine Isolierung (12) und eine die Isolierung (12) umgebende leitfähige Schicht (11) aufweist, mit einer Hochspannungs-Freileitung (3), umfassend
- einen Trocken-Endverschluss (4), der wenigstens über einen Teil seiner Länge flexibel ist und wenigstens eine Feldsteuerelektrode (18) zur Steuerung des elektrischen Felds im Endbereich der leitfähigen Schicht (11) aufweist, und
- eine Stützeinrichtung (5) mit wenigstens einem Stützarm (6) zur Stützung des flexiblen Endverschlusses (4),
wobei im montierten Zustand der Leiter (13) des Hochspannungskabels (2) durch den Endverschluss (4) in Längsrichtung verläuft und am freileitungsseitigen Ende mit einer Anschlussarmatur (9) verbunden ist,
wobei die Anschlussarmatur (9) in Längsrichtung des Endverschlusses (4) relativ zur Stützeinrichtung (5) verschiebbar geführt ist.

2. Vorrichtung (1) nach Anspruch 1, wobei der Endverschluss (4) relativ zur Stützeinrichtung (5) drehbar ist.

3. Vorrichtung (1) nach Anspruch 1 oder 2, die eine Spannvorrichtung (8) umfasst, wobei mit der Spannvorrichtung (8) der Endverschluss (4) wenigstens über den flexiblen Teil seiner Länge mit einer Spannkraft beaufschlagbar ist.

4. Vorrichtung (1) nach Anspruch 3, wobei die Spannvorrichtung (8) wenigstens eine Feder (28) zur Erzeugung der Spannkraft umfasst.

5. Vorrichtung (1) nach einem der Ansprüche 1 bis 4, wobei die Anschlussarmatur (9) einen Bolzen (25) aufweist, wobei der Bolzen (25) in Längsrichtung des Endverschlusses (4) von der Stützeinrichtung (5) verschiebbar geführt ist.

6. Vorrichtung (1) nach Anspruch 5, wobei die Spannvorrichtung (8) so an der Stützeinrichtung (5) und am Bolzen (25) der Anschlussarmatur (9) angeordnet ist, sodass der Bolzen (25) mit der Spannkraft und die Stützeinrichtung (5) mit einer entsprechenden Gegenkraft beaufschlagt ist.

7. Vorrichtung (1) nach einem der Ansprüche 1 bis 6, wobei der Endverschluss (4) im Bereich seines kabelseitigen Endes relativ zur Stützeinrichtung (5) in Längsrichtung festgelegt ist.

8. Vorrichtung (1) nach einem der Ansprüche 1 bis 7, wobei der Endverschluss (4) für eine elektrische Spannung im Bereich von 123 kV bis 300 kV dimensioniert ist.

9. Vorrichtung (1) nach einem der Ansprüche 1 bis 8, wobei der Endverschluss (4) wenigstens entlang des flexiblen Teils seiner Länge mit wenigstens einem äußeren, umlaufenden Vorsprung ausgerüstet ist.

10. Vorrichtung (1) nach einem der Ansprüche 1 bis 9, wobei der Endverschluss (4) entlang des flexiblen Teils seiner Länge im Wesentlichen aus einem Isolierkörper (7) aus Silikon gefertigt ist.

11. Vorrichtung (1) nach einem der Ansprüche 1 bis 10, wobei die Stützeinrichtung (5) im montierten Zustand gegenüber dem Leiter (13) und der leitfähigen Schicht (11) des Hochspannungskabels (2) elektrisch isoliert angeordnet ist.

12. Vorrichtung (1) nach einem der Ansprüche 1 bis 11, wobei der wenigstens eine Stützarm (6) vollständig isolierend ist oder mit einem Überspannungsableiter ausgerüstet ist.

13. Verfahren zur Montage einer Vorrichtung (1) zur Verbindung eines isolierten Hochspannungskabels (2) mit einer Hochspannungs-Freileitung (3) an einem Podest (33) eines Freileitungsmasts (34) für die Hochspannungs-Freileitung (3),
wobei das Hochspannungskabel (2) einen Leiter (13), eine Isolierung (12) und eine die Isolierung (12) umgebende leitfähige Schicht (11) aufweist, und
wobei die Verbindungsvorrichtung (1)
- einen Trocken-Endverschluss (4),
der wenigstens über einen Teil seiner Länge flexibel ist,
wenigstens eine Feldsteuerelektrode (18) zur Steuerung des elektrischen Felds im Endbereich der leitfähigen Schicht (11) aufweist, und
eine Anschlussarmatur (9) für den Leiter (13) des Hochspannungskabels (2) aufweist, und
- eine Stützeinrichtung (5) mit wenigstens einem Stützarm (6) zur Stützung des flexiblen Endverschlusses (4) umfasst,
wobei der Endverschlusses (4) relativ zur Stützeinrichtung (5) drehbar ist,
wobei bei dem Verfahren
- das Anschließen des Hochspannungskabels (2) am Trocken-Endverschluss (4) und
- das Vormontieren der Verbindungsvorrichtung (1) unterhalb des Podests (33) erfolgen,
- die so vormontierte Verbindungsvorrichtung (1) mit dem bereits angeschlossenen Hochspannungskabel (2) zum Podest (33) des Freileitungsmasts (34) angehoben und an diesem montiert wird, wobei eine Torsion des Hochspannungskabels (2) durch die Relativdrehbarkeit von Endverschluss (4) und Stützeinrichtung (5) verhindert oder zumindest reduziert wird, und
- die Hochspannungs-Freileitung (3) an dem Trocken-Endverschluss (4) angeschlossen wird.

14. Verfahren nach Anspruch 13 zur Montage einer Vorrichtung (1) nach einem der Ansprüche 1 bis 12.
